(19) Europäisches Patentamt
European Patent Office
Office européen des brevets

(11) **EP 1 912 423 A1**

(12) **EUROPEAN PATENT APPLICATION**

(43) Date of publication:
**16.04.2008 Bulletin 2008/16**

(51) Int Cl.:
*H04N 1/405* (2006.01)    *H04N 1/52* (2006.01)
*H04N 1/54* (2006.01)

(21) Application number: **06122100.8**

(22) Date of filing: **11.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Hewlett-Packard Development Company, L.P.**
**Houston, Texas 77070 (US)**

(72) Inventors:
• **Encrenaz, Michel**
 **08174 Barcelona (ES)**

• **Lammens, Johan**
 **08174 Barcelona (ES)**
• **Morovic, Jan**
 **08174 Barcelona (ES)**

(74) Representative: **Durville, Guillaume**
 **Hewlett Packard Espanola, S.L.**
 **Legal Dept.**
 **Avda. Graells 501**
 **Sant Cugat del Valles**
 **08174 Barcelona (ES)**

(54) **Error diffusion based on Kueppers' color separation and halftoning methods**

(57) A method is provided of reproducing continuous tone pixel colors of a color image having many pixels based on Kueppers' device states, wherein the Kueppers' device states of a printing device are the printed pixel colors that are allowed based on Kueppers' color separation and halftoning. The method includes selecting a Kueppers' device state in the proximity of a continuous tone pixel color to be reproduced from the printing device's set of Kueppers' device states, and printing the Kueppers' device state. An error is diffused between the continuous pixel color and the selected Kueppers' device state to one or more pixels in the neighborhood.

Fig. 7

**Description**

FIELD OF THE INVENTION

The present invention generally relates to methods, systems and computer program products for error diffusion, and for example, to methods, systems and computer program products for error diffusion based on Kueppers' color separation and halftoning methods.

BACKGROUND OF THE INVENTION

Printing with three subtractive primary colors cyan, magenta, yellow plus black is standard in today's printing technology, and is usually referred to as CMYK-printing. (The color black is usually abbreviated by the letter "K", which stands for "key".) In order to mix the subtractive colors on the paper, ink dots are deposited on the paper thereby yielding partially overlapping color dots. In the overlapping regions, each color dot represents a filter according to the rules of subtractive color mixing, so that cyan and magenta yields a blue color, cyan and yellow yields a green color and magenta and yellow yields a red color. Subtractive color mixing is also referred to as physical color mixing, since each of the colors cyan, magenta and yellow acts as a filter overlay. Cyan filters out red light from the spectrum of white light, magenta filters out green light and yellow filters out blue light. It is noted that red, green and blue are the primary colors of additive color mixing as used e.g. in color television. In non-overlapping regions, cyan, magenta, and yellow act as additive (more precisely: optical) colors. The idea of printing small dots or other geometrical surfaces of primary colors within a small pixel area on a print medium to obtain any color instead of printing a solid area with said color is referred to as "halftoning" which has the advantage that only a small set of different inks is used, less ink is used (since in many halftoning techniques, parts of the image remain unprinted) and that therefore the paper does not become saturated compared to the usage of the solid color areas.

However, it has been observed that the colors of the colors red, green and blue cannot be reproduced very brightly by means of the three subtractive primary colors. Therefore, Harald Kueppers devised a color separation which is based on the colors cyan, magenta and yellow on the one side, red, green and blue on the other side, and the colors black and white. This color separation and the printing technique based on it are described e.g. in US 4,812,899 and US 4,878,977. Starting from a red, green and blue representation of a pixel color, Kueppers transforms this representation by means of what he refers to as "integral color mixing" into a representation in which a pixel is represented by juxtaposed non-overlapping solid elemental surfaces - a surface of one color of the three additive primary colors appears, a surface of one color of the three subtractive primary colors appears (chromatic component of the pixel), and a black surface and a white surface (achromatic component of the pixel). Although Kueppers' seven-color printing offers considerable advantages over traditional four color CMYK printing, his method has found little or no practical application in analog or digital printing, probably due to the difficulty of generating the required color separations at sufficiently high resolution, and the corresponding printing processes with sufficiently high resolution color to color registration accuracy.

SUMMARY OF THE INVENTION

A method is provided of reproducing continuous tone pixel colors of a color image having many pixels based on Kueppers' device states. The Kueppers' device states of a printing device are the printed pixel colors that are allowed based on Kueppers' color separation and halftoning. The method includes selecting a Kueppers' device state in the proximity of a continuous tone pixel color to be reproduced from the printing device's set of Kueppers' device states, printing the Kueppers' device state, and diffusing an error between the continuous tone pixel color and the selected Kueppers' device state to one or more pixels in the neighborhood.

According to another aspect, a printing device is provided which includes a controller for performing a method of reproducing continuous tone pixel colors of a color image having many pixels based on Kueppers' device states. The Kueppers' device states of a printing device are the printed pixel colors that are allowed based on Kueppers' color separation and halftoning. The method includes selecting a Kueppers' device state in the proximity of a continuous tone pixel color to be reproduced from the printing device's set of Kueppers' device states, printing the Kueppers' device state, and diffusing an error between the continuous tone pixel color and the selected Kueppers' device state to one or more pixels in the neighborhood.

According to still another aspect, a computer program product is provided which is either in the form of a machine-readable medium with program code stored on it, or in the form of a propagated signal including a representation of program code. The program code is arranged to carry out a method, when executed on a computer, of reproducing continuous tone pixel colors of a color image having many pixels based on Kueppers' device states. The Kueppers' device states of a printing device are the printed pixel colors that are allowed based on Kueppers' color separation and halftoning. The method includes selecting a Kueppers' device state in the proximity of a continuous tone pixel color to be reproduced from the printing device's set of Kueppers' device states, printing the Kueppers' device state, and diffusing an error between the continuous tone pixel color and the selected Kueppers' device state to one or more pixels in the neighborhood.

Other features are inherent in the methods and products disclosed or will become apparent to those skilled in the art from the following detailed description of embodiments and accompanying drawings.

BRIEF DESCRIPTION OF THE DRAWINGS

Embodiments of the invention will now be described, by way of example, and with reference to the accompanying drawings, in which:

Fig. 1 illustrates a seven-color inkjet printer, according to embodiments of the invention;
Fig. 2 illustrates a computer system and printer which incorporate the present invention;
Fig. 3a depicts reflectance behavior of three subtractive primary colors and three additive (optical) primary colors which are used in Kueppers' color separation;
Fig. 3b shows reflectance behavior of the achromatic colors black and white which are used in Kueppers' color separation;
Fig. 4 shows the principles of subtractive and optical color mixing;
Fig. 5 illustrates Kueppers' color separation (integral color mixing);
Fig. 6a illustrates the principle of a halftoning technique proposed by Kueppers for his color separation;
Fig. 6b illustrates the principle of amplitude modulation halftoning for a CMY color printer;
Fig. 6c illustrates the principle of frequency modulation halftoning for a CMY color printer;
Fig. 7 shows the CIE-LAB-color space including some single-color Kueppers' device states, according to embodiments of the invention;
Fig. 8 illustrates an image, represented as a matrix of LAB-values, on which an error diffusion algorithm is applied, according to embodiments of the invention;
Fig. 9 shows first steps of an error diffusion algorithm using a Voronoi diagram applied to the image of Fig. 8, according to embodiments of the invention;
Fig. 10 shows a Floyd-Steinberg error diffusion scheme, according to embodiments of the invention;
Fig. 11 is a flowchart indicating the course of action of a Kueppers' state error diffusion performed in a device-dependent ink color space, according to embodiments of the invention;
Fig. 12 is a flowchart indicating the course of action of a Kueppers' state error diffusion performed in a device-independent color space, according to embodiments of the invention;
Fig. 13 illustrates a LUT-based embodiment of the invention;
Fig. 14 illustrates the selection of a major entry and a device state given a desired RGB-value, according to embodiments of the invention; and
Fig. 15 is a flowchart illustrating the basic steps performed using the implementation of Figs. 13 and 14.

The drawings and the description of the drawing are of embodiments of the invention and not of the invention itself.

DESCRIPTION OF THE PREFERRED EMBODIMENTS

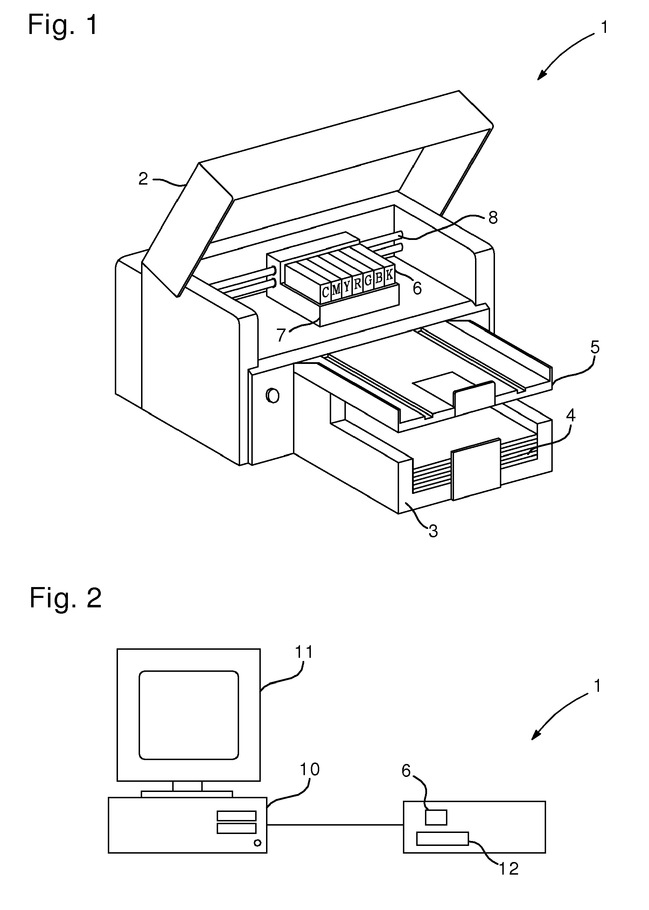

Fig. 1 shows a seven-color inkjet printer which is able to print an image by using a Kueppers' state error diffusion procedure. However, before proceeding further with the description of Fig. 1, a few items will be discussed.

In some of the embodiments, continuous tone pixel colors of a color image having many pixels based on Kueppers' device states are reproduced. The Kueppers' device states of a printing device are the pixel colors that are reproducible by the printing device based on Kueppers' color separation and halftoning. The method includes selecting a Kueppers' device state in the proximity of a continuous tone pixel color to be reproduced from the printing device's set of Kueppers' device states. Then, the Kueppers' device state is printed, and an error between the continuous tone pixel color and the selected Kueppers' device state is diffused to one or more pixels in the neighborhood.

In some of the embodiments, the continuous tone pixel color to be reproduced is an original pixel color of the color image, or an original pixel color of the color image in combination with an error diffused from pixels already visited. In some of the embodiments, this combination is implemented by adding an error from pixels already visited to the original pixel color.

The term "pixel" as used herein refers to a color separation which is defined by means of primary color components. A color separation indicates which percentages of the primary colors are needed to represent any color. A color separation can be implemented, for example, on a color monitor; then the percentages indicate how intensely the red, green, and blue phosphors on the inner side of a screen are excited. A color separation may also be implemented by printing techniques. Then, the percentages indicate the sizes of areas (coverages) of a small area (pixel area) that are to be covered with dots of primary colors (e.g. cyan, magenta and yellow) to obtain a color impression in the eye of the observer. This effect only occurs, if the observer looks at the dots from a sufficiently large distance. The implementation of a color separation by means of dots of primary colors is referred to as halftoning.

The term "continuous tone pixel color" refers to a color separation in which, for example, as many color tones may be represented as are distinguishable by a human observer. For example, an RGB- separation with 8-bits for each of the primary colors may provide as many color tones as are distinguishable by the human eye. A "continuous tone pixel color" is a point of the image to be reproduced or it is a color of the image to be reproduced in combination with an error diffused from pixels already visited.

In some of the embodiments, the pixels in the neighborhood of a pixel currently visited are the pixels directly to the left, to the right, above and below the pixel currently visited.

It is noted that, in other embodiments, the term "neighborhood" of a pixel does not only refer to pixels which are directly adjacent to the pixel which is currently visited, but also to pixels which are within a predetermined distance from the pixel currently visited. As mentioned above, in some of the embodiments, the error is diffused to one neighboring pixel only. This may be performed, for example, preferably in combination with a randomization, in which in each error diffusion step, one of the neighboring pixels is randomly selected.

The wording "a Kueppers' device state in the proximity of a continuous tone pixel color" is to be understood in the sense that the Kueppers' device state is close to the continuous tone pixel color in terms of the optical impression yielded by the two different points in the color space in which the color reproduction method according to embodiments of the invention is performed. In the CIE-LAB color space, for example, two color points are the more optically close, the smaller is the Euclidean distance between them. However, in an eight-dimensional device space (= ink color space) according to Kueppers' color separation, two points may belong to the same optical impression although their Euclidean distance is unequal to zero.

To ensure understanding of the principle of Kueppers' color separation, the terms (a) "additive", (b) "optical", and (c) "subtractive" color mixing will be elucidated below.

    a) Additive color mixing refers to the mixing of beams of light with photons of certain wavelengths. The color receptors in the human eye, called cones, carrying pigments, are stimulated by certain spectra of light. The peaks of these stimulations (absorption) are approximately in the short-wave sector at 419 nm (blue pigment), in the middle-wave sector at 531 nm (green pigment) and in the long-wave sector at 558 nm (red pigment). By stimulating the cones with beams of light of different intensities of these wavelengths, all color impressions can be obtained. It should be mentioned, however, that the absorption-schemes of the color pigments of the cones, and therefore their excitation, are correlated which means that by stimulating a cone with green light, also the blue cone pigment is excited.

    b) Optical color mixing refers to printing technology, and features printing colors dots so closely next to each other that the observer gets, from a certain distance, due to the limited resolution of his/her eyes the impression that s/he actually perceives one (mixed) color instead of two different colors (coming from two close but locally different places). Thereby, the color impression only occurs in the observer's eye, whereas in additive color mixing, a stream of mixed photons actually excites the eye's color receptors. The primary colors in optical mixing are the same as the primary colors of additive mixing: red, green and blue.

    c) Subtractive color mixing also refers to printing technology, but to the physics of color ink. The three primary colors in subtractive color mixing are cyan, magenta and yellow. By printing these colors one above the other, all color impressions can be obtained. To understand this phenomenon, one has to be aware that colors printed on a piece of paper, being irradiated with white light (= a complete spectrum of visible colors), absorb some parts of the spectrum, whereas other parts are reflected and stimulate the pigments in the cones in the eye of the observer. For example, the color cyan absorbs all red parts of the light spectrum and reflects the blue and green parts of the spectrum. Cyan may therefore be referred to as a "long-wavelength subtractor". Magenta absorbs green parts of the spectrum and is therefore a "medium-wavelength subtractor", while it reflects the red and blue parts of the spectrum. Yellow is a "short-wavelength-subtractor" or a blue subtractor.

When a cyan dot is printed on top of a magenta dot, both the red parts of the spectrum and green parts of the spectrum are absorbed so that only blue light is reflected. This means that both color dots behave as a filter. However, the blue color obtained is in most cases not a very saturated blue, since a broad range of the white light spectrum is still reflected. Since a broad range of the spectrum is reflected, the color appears bright.

The spectrum of the primary colors of optical mixing is narrower than the spectrum of the subtractive primary colors. If a red dot is printed on top of a green dot, the color obtained would be black, since the red dot only reflects red parts of the spectrum and the green dot only reflects green parts of the spectrum. When one dot is printed on top of the other, then all light is absorbed and no light is reflected, which corresponds to the color black. However, when red and green color dots are printed next to each other, in a non-overlapping printing mode, the color impression obtained in the eye is not yellow, since the green and red color spectrum refer to narrow color spectra, so that the printing of a green dot next to a red dot would lead to a dark color since only small parts of the spectrum are reflected.

Kueppers' color separation, which is also referred to as "integral color mixing" by himself, uses the primary colors of subtractive color mixing (cyan, magenta and yellow) and the primary colors of optical color mixing (red, green and blue). However, the colors are not printed on top of each other, which means that the color mixing is not subtractive but is, in fact, an optical color mixing which, besides the original optical primary colors, also uses the subtractive primary colors, like in optical mixing, by printing them next to each other. Furthermore, the achromatic colors black and white are used. Since the subtractive primary colors (reflecting large parts of the spectrum) are printed next to each other, they enable bright colors to be printed. Therefore, the optical primary colors only need to be used to reflect the surplus between a dominant additive color (the color with the highest percentages) and a second-dominant optical primary color (the color with the second highest percentages) is obtained, which will be explained below. In essence, the deficit of color mixing based on the optical primary colors red, green and blue and their darkness due to the low reflectance of these colors is compensated by the high reflectance of the colors cyan, magenta and yellow, which means that brighter colors can be printed. On the other hand, the deficit of color mixing based on the subtractive primary colors cyan, magenta and yellow leading to desaturated gray colors is compensated by the saturated colors red, green and blue. Thereby, the synthesis of subtractive and optical primary colors in combination with the achromatic colors black and white as devised by Kueppers leads to an enlarged color gamut in comparison to printing with the colors cyan, magenta and yellow only.

For the implementation of Kueppers' color separation on a printing device, Kueppers' also describes a halftoning procedure, in which a pixel color is represented by dividing a pixel area of an image into juxtaposed, substantially non-overprinted elemental areas which form a chromatic and an achromatic component. The chromatic component of said pixel area is further divided into juxtaposed rectangular sub-sections and each of the sub-sections is printed with only one color. The sub-sections of said elemental areas which form the chromatic component are printed with at most one of three optical primary color inks and at most one of three subtractive color inks. The relative sizes of white and black elemental areas are varied according to the achromatic component of the color.

In Kueppers' halftoning technique, the elemental areas are represented as solid areas, which means that they are completely filled with ink color. As mentioned above, the subsections of the elemental areas are juxtaposed substantially in a non-overprinted area.

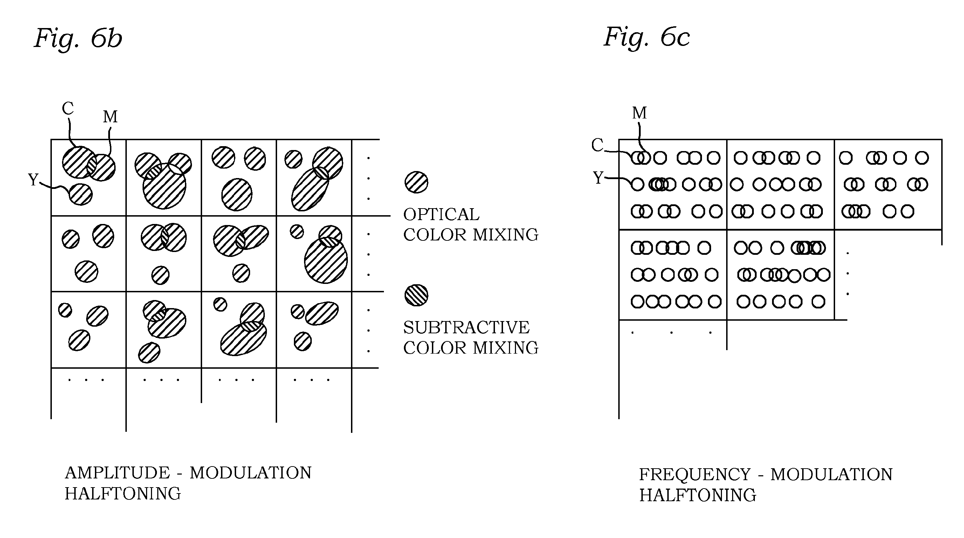

Incidentally, Kueppers' halftoning is a continuous technique in that the sub-sections may have areas from a continuous set of possible area sizes. In this aspect, Kueppers' technique resembles an amplitude modulation halftoning which will be explained below (cf. Fig. 6b). As mentioned at the outset, Kueppers' halftoning procedure has not found much favor in practical applications due to printing the required color separations at sufficiently high resolution. Therefore, the invention aims to define a set of device states representing a set of printed pixel colors with only reduced resolutions of the color separations. When printing a continuous tone color, an error occurs due to the reduced resolution, and the error is diffused to pixels in the neighborhood, so that the overall color impression within a certain area corresponds to the continuous tone color to be reproduced.

In some of the embodiments, Kueppers' color separation and halftoning is used as a basis to define a discrete set of Kueppers' state devices.

The term "device state" refers to a printed pixel color which is directly reproducible by a printing device. This means that "device states" are colors (or color impressions) that a reproducible on a pixel-level, whereas other colors may only be reproduced "indirectly" by putting several pixels (represented as device states) next to each other and obtaining an average of the pixel colors in the eye of the observer from a sufficiently large distance. An error diffusion is needed to get "in the average" the continuous pixel color to be reproduced. Typically, a continuous tone color is represented as an RGB-value with three 8-bit values, resulting in $256^3 = 16,777,216$ possible colors. However, not all of these colors may be reproduced directly as a device state.

The term "Kueppers' device state" refers to a printed pixel color which is directly reproducible by a seven-color printing device in which colors are represented according to Kueppers' color separation and halftoning. In the following, four different implementations of Kueppers' device states will be explained:

Single-color device states:

a) In some of the embodiments, a "Kueppers' device state" is a dot of one of the colors white, black, cyan, magenta, yellow, red, green, and blue. The dots are printed next to each other with substantially no space between them. In these embodiments, a pixel corresponds to a dot.

b) In other embodiments, a pixel representing a Kueppers' device state is made up of dots which are printed next to each other with substantially no space between them, whereby all dots of one pixel have the same color. The colors are those colors which are provided as inks in the seven-color printing device, i.e. the colors used in Kueppers' color separation, namely cyan, magenta, yellow, red, green, blue, black and white. In some of the embodiments, the color white is not implemented as an ink, but is represented as the white of the paper on which the pixel is printed. However, since the device states in the implementation b) include more dots than in the implementation a), the image to be reproduced will appear coarser.

Multi-color device states:

c) In other embodiments, the Kueppers' device states are pixels represented as a 2x2 sub-pixel matrices, whereby each of the four sub-pixel is a dot. The dots are printed next to each other with substantially no space between them. In these embodiments, a sub-pixel corresponds to a dot.
d) In yet other embodiments, the Kueppers' device states are pixels represented as a 2x2 sub-pixel matrices, whereby each sub-pixel is made up of several dots. All dots of one sub-pixels have the same color. In some of the embodiments, all sub-pixels have the same size (=the same number of dots). However, since these device states are larger than those of c), the image to be printed will appear coarser. The dots are printed next to each other with substantially no space between them.

In the implementations c) and d), one sub-pixel (typically the north-east sub-pixel) is made up of dots of an optical primary color, one sub-pixel (typically the south-west sub-pixel) is made up of dots of a subtractive primary color, one sub-pixel (typically the north-west sub-pixel) is made up of white dots (or is left unprinted), and one sub-pixel (typically the south-east sub-pixel) is made up of black dots. However, the dots of the four sub-pixels may also be of the same color, e.g. all dots of the pixel may be cyan, magenta, black, red, etc.

Pixels are also admissible, in which e.g. two or three sub-pixels are made up of dots all having the same color, and the remaining sub-pixel(s) has/have a different color. However, according to Kueppers' color separation, it is not allowed to use two or three different primary optical colors, or two or three different primary subtractive colors within one 2x2 sub-pixel matrix. The term "Kueppers' device state" also implies that no dots are printed on top of each other. Without departing from the scope of the invention, it may happen, however, that dots are accidentally printed on top of each other due to mechanical imprecisions of the printing device or low viscosity of the inks. However, this printing on top of each other is undesired.

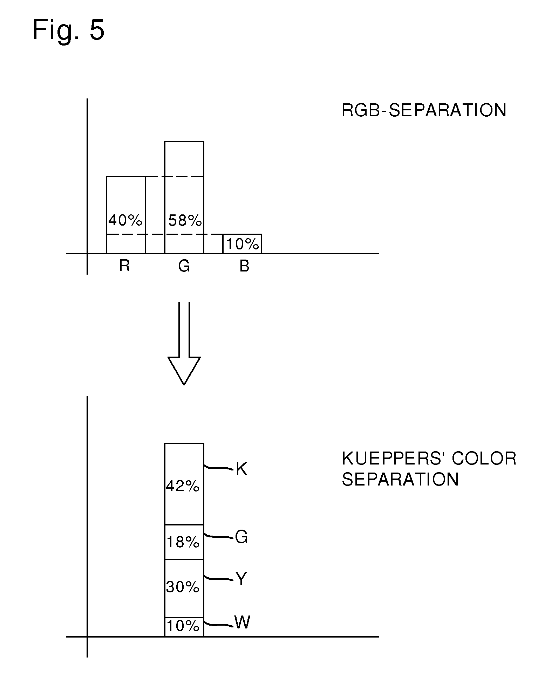

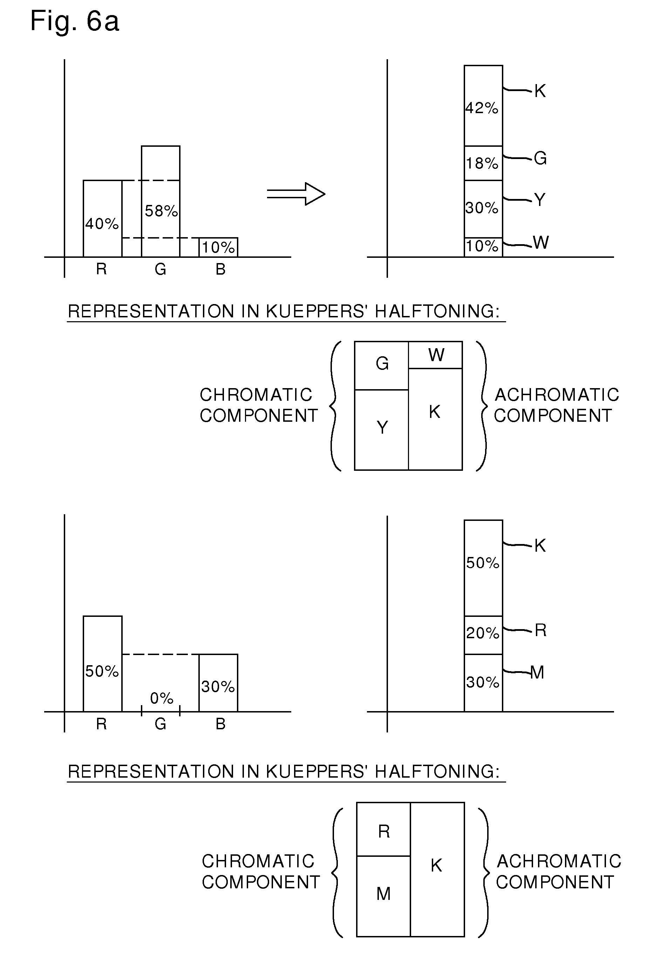

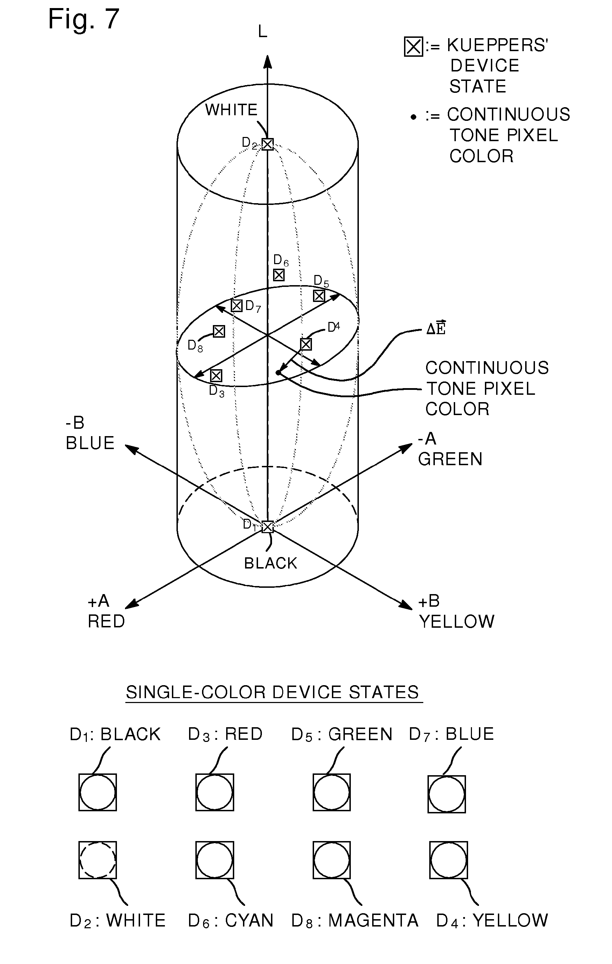

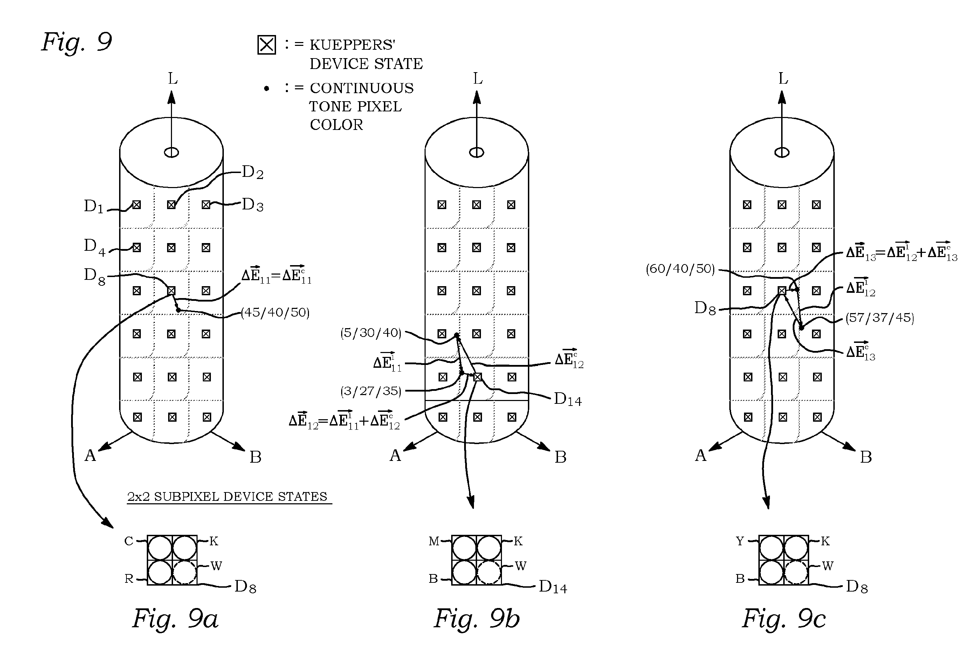

The expression "a printed pixel color allowed based on Kueppers' color separation and halftoning" therefore denotes that colors used within a pixel are in accordance to Kueppers' color separation (cf. Fig. 5), and individual dots of a pixel are ideally (i) not supposed to be overprinted and (ii) no space between the dots is to be left due to Kueppers' halftoning (cf. Fig. 6). Both targets may be achieved if dots may be printed, for example, in a rectangular form which cannot be obtained for physical reasons by spraying a single ink drop onto a print medium. However, if a pixel is represented as one (cf. Fig. 7) or four dots (cf. Fig. 9) each having the form of a circle, then the non-overprinting target (i) may only be fulfilled by leaving a (white) space between the dots. This white space may be used to represent the white component of the pixel. However, a pure black pixel or a pixel color with a large black component may not be printed. If, however, according to target (ii), no space is to be left between the dots, then the dots have to be printed on top of each other which means that the overprinted parts of the dots disturb the pixel color. Therefore, when using circular dots a trade-off between the two conflicting targets (i) and (ii) has to be made.

It should be mentioned that in Kueppers' (continuous) halftoning technique, the pixel is divided in sub-areas in a continuous way which reminds one of an amplitude modulation halftoning, whereas in some of the embodiments, the number of the sub-pixels per pixel is always four, whereby all four sub-pixels have the same size. However, these four sub-pixels may be of different colors e.g. (2 sub-pixels red, 2 sub-pixels white or 3 sub-pixels black, 1 sub-pixel green, etc.). This is similar to a frequency modulation halftoning technique (cf. Fig. 6c) in which a fixed number of same-sized dots is printed per pixel, and a certain number of dots has a certain color to obtain a color impression in the eye of the observer.

In contrast to traditional halftoning techniques (cf. Figs. 6b and c), in some of the embodiments of the invention, the individual dots are not printed on top of each other, but are printed next to each other with substantially no space between them. The halftone obtained in this way causes an optical illusion of a shade somewhere between the tone of solid ink and the contrasting tone of the "background"- paper. The effect has its limits, and when the dots get too small or are spaced too far apart, the illusion becomes less pronounced and the brain may start perceiving individual dots again. A halftone, then, is typically an ink reproduction of a continuous-tone picture. The reproduction simulates the illusion of continuous tones by reproducing its many dots at a size not readily noticed by observers. These dots are usually printed at a size just below the visual acuity of an observer looking at the reproduction at a common viewing distance. This optical illusion is important because it compensates for the inability of printing presses and ink to otherwise create a scale of tones in-between the tone of solid ink (typically black) and the tone of un-inked paper (typically white).

In some of the embodiments, a continuous tone pixel color is printed by the seven-color printing device. However, for reproduction purposes only the set of Kueppers' device states is available. Hence, a device state in proximity of the continuous tone pixel color is determined. In some of the embodiments, this selected device state is the closest device state with regard to the continuous tone pixel color. The term "closest", however, only has a meaning with regard to a metrics defined in the color space in which the error diffusion is performed.

As mentioned above, the printed pixel colors which can be printed by a particular printer are sometimes referred to as its palette of colors or device states. Typically, the number of RGB-colors that can be generated by a computer and displayed on the computer's display screen is much more than the palette of colors available for a particular printer. Thus, there will typically be some error between the printed color pixel and the ideal continuous color pixel generated by the computer for that pixel. Using error diffusion halftoning techniques, the error between the actual color to be printed by the printing device and the continuous tone pixel color is dispersed to nearby pixels. The colors then printed in those nearby pixel positions will compensate for the tone errors in other nearby color pixels so that the overall tone in an area closely matches the true RGB tone generated by the computer.

To this end, in some of the embodiments, error diffusion is performed in a perceptually linear color space which means that a color in the middle between two other colors is perceived as being in the middle between these two colors. It is mentioned that a CMYK color space of a printer usually does not have this property. Two color spaces which may be used to perform the error diffusion are the CIE-LAB-color space and the LUV-color space which both are perceptually linear.

Therefore, in some of the embodiments, as a first step, all continuous tone pixel colors of the color image are transformed into color values of a perceptually linear color space in which the Kueppers' device states are also indicated.

In other embodiments, the continuous pixel colors and the Kueppers' device states are represented in an eight-dimensional Kueppers' device color space. This color space is partitioned into three-dimensional sub-spaces (at least four out of the eight components are set to zero, the sum of components adds up to 100%). However, there are also points within the entire eight-dimensional space which are not within one of the sub-spaces and are therefore inadmissible (e.g. since they have two subtractive color components unequal to zero). These points need to be reduced to admissible points which will be explained below (see description of Fig. 9). The steps of selecting a Kueppers' device state in the proximity of a continuous tone pixel color to be reproduced from the printing device's set of Kueppers' device states is performed in the Kueppers' device color space. The error diffusion step is also performed in this color space.

In embodiments with single-color device states, selecting a device state in the proximity of a continuous tone pixel color is selecting the device state corresponding to the largest color component of the continuous tone pixel color.

In some of the embodiments, an error diffusion is performed according to Floyd-Steinberg's error diffusion scheme.

In some of the embodiments, the error between the continuous tone pixel color and the selected Kueppers' device state is an error vector which represents the difference between the continuous tone pixel color and the selected Kueppers' device state.

In some of the embodiments of a single-color device state, the device state selected in the proximity of the continuous pixel color is the device state having the color of a largest component of the continuous pixel color.

In other embodiments, a preprocessing is performed in the perceptually linear color space in which a Voronoi diagram is calculated with regard to the Kueppers' device states. This enables an efficient calculation of closest device states during the error diffusion procedure.

For any topologically discrete set S of points in Euclidean space (here: CIE-LAB- color space), the Voronoi diagram with regard to the set S (device states) represents all points of the Euclidean space that have a smallest distance to at least two points of S. To put it another way, a Voronoi diagram of a set of "sites" is a collection of regions that divide up the plane. Each region corresponds to one of the "sites", and all the points in one region are closer to the corresponding site than to any other site.

After having calculated the Voronoi diagram for the set of device states, the closest device state for the color to be reproduced can be determined efficiently.

This color is printed and the error is diffused to pixels in the neighborhood in the image.

In some of the embodiments, the continuous tone pixel color is stored as possible 256 tone levels (8-bit) for each of the colors red, green and blue. To reduce the storage requirement, these colors may be mapped onto a reduced set of tone levels by means of look-up tables. These look-up tables contain the 256 tone colors and the reduced tone colors. These colors are referred to as "major entries". An error between the continuous tone pixel color and the major entry is referred to as $e_1$. In a second step, the Kueppers' device state closest to the determined "major entry" is figured out by means of device state look-up tables, and the error between the Kueppers' device state and the determined "major entry" is referred to as $e_2$. The overall error between the continuous tone pixel color and the Kueppers' device state is then calculated by $e=e_1+e_2$.

In some of the embodiments, different look-up tables are provided for different media.

Some of the embodiments refer to a printing device that includes a controller for reproducing continuous tone pixel colors by means of Kueppers' device states. The reproduction of the continuous tone pixel color is performed in accordance with the embodiments described above.

Some of the embodiments of the computer program product with program code for performing the described methods include machine-readable medium that is capable of storing or encoding the program code. The term "machine-readable medium" shall accordingly be taken to include, for example, solid state memories, and, removable and non-removable, optical and magnetic storage media. In other embodiments, the computer program product is in the form of a propagated signal comprising a representation of the program code, which is increasingly becoming the usual way to distribute software. The signal is, for example, carried on an electromagnetic wave, e.g. transmitted over a copper cable or through the air, or a light wave transmitted through an optical fiber. The program code may be machine code or another code which can be converted into machine code, such as source code in a multi-purpose programming language, such as e.g. C, C++, Java, C#, etc. The embodiments of a computer system may be commercially available general-purpose computers programmed with the program code.

Fig. 1: Inkjet color printer

Returning now to Fig. 1 which shows a seven color inkjet printer 1 which includes processing circuitry for performing all or part of the Kueppers' state error diffusion method described herein. The color inkjet printer includes a cover 2, a paper tray 3 for holding virgin paper 4, an output tray 5 for receiving the printed pages, seven color ink print cartridges 6, and a scanning carriage 7 for sliding along a slide bar 8 while dots are being printed on the paper. The color print cartridges 6 include cyan, magenta, yellow, red, green, blue and black. The color white which is also necessary for Kueppers' color separation is represented by the white of the paper. Incidentally, the color inkjet printer 1 is only an exemplary printer, and the Kueppers' state error diffusion procedure according to embodiments of the invention may be applied to any seven color printer, whether large or small format, inkjet, LEP (liquid electrophotography), DEP (direct electrostatic printing), etc.

Fig. 2: Printing system

Fig. 2 is a schematic diagram of a printing system which includes a host computer 10, a monitor 11 (e.g. a CRT), and the seven color inkjet printer 1 of Fig. 1. The printer 1 has color print cartridges 6 which scan across a medium and print droplets of color ink as described below.

The printer 1 includes a printer controller 12 which receives coded signals from computer 10 and provides firing signals to the print cartridges 6 to print color dots. The print cartridges may print at 300 dots-per-inch (dpi), 600 dpi, or any other resolution. If multiple drops of the same color area are to be deposited over the same pixel position (or dot position) to print a multi-drop ink spot on a medium, the carriage containing print cartridges 6 may make multiple scans across the medium to print such overlapping dots.

The techniques described herein for converting an RGB image generated by computer 10 to ink droplets ejected from print cartridges 6 may be implemented using a combination of hardware and software, where portions of the hardware/software are incorporated in computer 10 and other portions located in printer 1. The location of the hardware/software for carrying out this method is a matter of design choice.

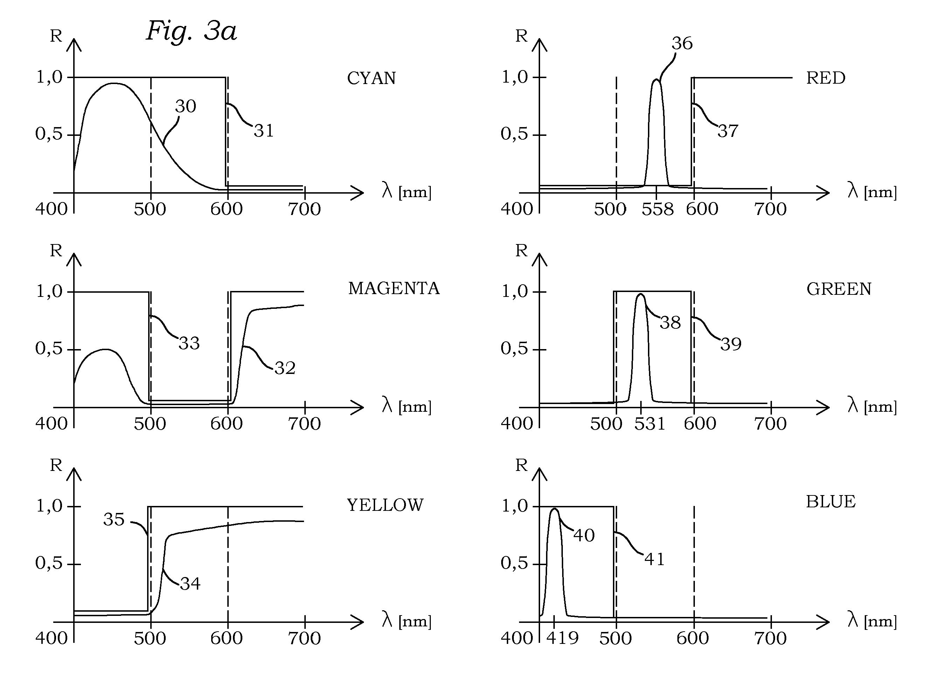

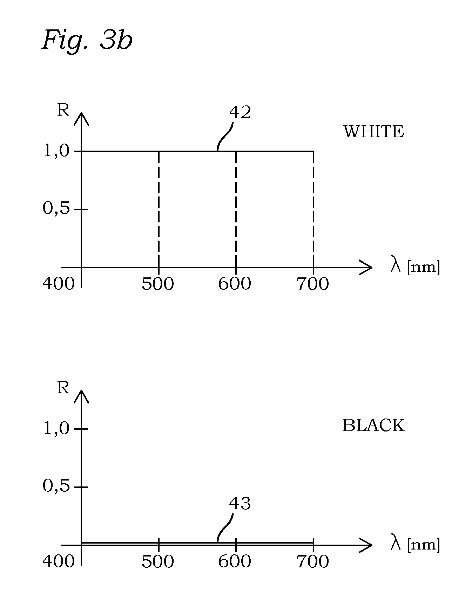

Fig. 3: Reflectance behavior of different primary colors

Fig. 3a refers to typical reflectance diagrams of additive (optical) and subtractive primary colors used in Kueppers' color separation for the chromatic component. The left column of Fig. 3a refers to the reflectance behavior of the three subtractive colors cyan, magenta and yellow, whereas the right column refers to the reflectance behavior of the three optical primary colors red, green and blue. In each diagram, the percentage of reflected light is indicated from a wavelength of 400 nm to a wavelength of 700 nm. Coarsely speaking, the blue spectrum ranges from 400 to 500 nm, the green spectrum goes from 500 to 600 nm and the red spectrum ranges from 600 to 700 nm.

The top diagram in the left column shows that the color cyan, when irradiated with white light (= the whole visible spectrum), reflects the blue parts and the green parts of the spectrum, but absorbs the red parts. Therefore, cyan is also referred to as a long-wavelength subtractor. There are two graphs indicated in the diagram, one graph 31 refers to an ideal developing of reflectance value, whereas the other graph 30 indicates the actual developing of reflectance values for a typical cyan ink used for color printing. The color cyan excites the color receptor for blue and green at the same time.

The second diagram in the left column shows that the color magenta reflects short wavelengths, and long wavelengths, but absorbs medium wavelengths in the green part of the spectrum when irradiated with white light. It should be mentioned that the short wavelengths (400 to 500 nm) are reflected less than the long wavelengths (600 to 700 nm). Again, two graphs of reflectance values are given. One graph 33 refers to an ideal magenta, whereas the other graph 32 indicates the reflectance of a typical magenta ink used in color inkjet printers. The color magenta excites the color receptor for red and blue at the same time.

The third diagram in the left column refers to reflectance behavior of the color yellow. One graph 34 indicates the reflectance percentages of a yellow ink used in color inkjet printers, whereas graph 35 illustrates ideal reflectance percentages. The blue parts (400 to 500 nm) of the spectrum are absorbed, while the green (500 to 600 nm) and red parts (600 to 700 nm) of the spectrum are reflected. The color yellow excites the color receptor for green and red at the same time.

The right column shows additive (optical) primary colors as used in Kueppers' color separation. However, although the red, green and blue are usually referred to as complementary colors to cyan, magenta and yellow, the red, green and blue have a much narrower reflectance spectrum than is absorbed by the corresponding complementary color. As will be explained below, the subtractive mixture of cyan and magenta yields blue. However, this blue reflects large parts of the white light and is therefore not a saturated blue since it excites more than the blue color receptor in the eye. The reflectance spectrum shown in the right column, however, refers to a saturated (pure) blue, since only wavelengths around 419 nm are reflected and these wavelengths only excite the blue receptor in the human eye. This color cannot be obtained by subtractive primary colors.

The top diagram in the right column shows a reflectance spectrum (graph 36) for the color red. Wavelengths around 558 nm, which only excite the red color receptor in the human eye, are reflected. The rest of the spectrum is absorbed. Graph 37 refers to an ideal red color, which reflects all wavelengths greater than 600 nm and absorbs all shorter wavelengths. The red color corresponding to the reflectance graph 36 only excites the color receptor for red in the human eye.

The second diagram in the right column illustrates a reflectance spectrum for the color green. Only wavelengths around 531 nm are reflected, whereas all other wavelengths are absorbed, as indicated by graph 38. This color only excites the green color receptor in the human eye. Due to the narrowness of the reflectance spectrum, the green color characterized by the reflectance spectrum appears dark.

The third diagram in the right column illustrates a reflectance spectrum for the color blue. Only wavelengths around 419 nm are reflected, whereas all other wavelengths are absorbed. This color only excites the blue receptor in the human eye. Since, however, the reflectance spectrum 40 is quite narrow, the blue color is rather dark.

Fig. 3b illustrates the reflectance behavior of the achromatic colors black and white which are also used in Kueppers' color separation.

The color white, indicated by graph 42, is usually represented by the paper on which the other colors are printed. Ideally, the white paper reflects all wavelengths of the white light. In contrast, the color black, indicated by graph 43, absorbs all colors. It does not reflect any wavelengths.

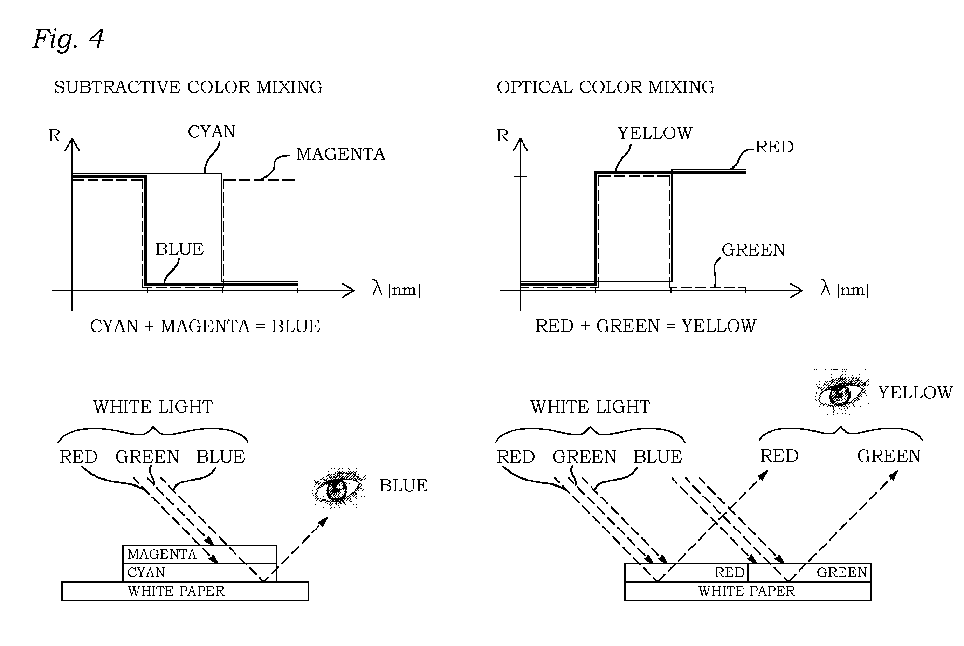

Fig. 4: Subtractive and optical color mixing

Fig. 4 illustrates the principles of subtractive and optical color mixing. In subtractive color mixing, which is shown on the left side of Fig. 4, the colors used act as filters when printed on top of each other. In the example shown, the color cyan which reflects the green and blue parts of the spectrum is printed on top of the color magenta which reflects the blue and red parts of the spectrum. To put it another way, the color cyan subtracts the red parts of the white light, and the color magenta subtracts the green parts of the white light. In sum, only the blue parts of the spectrum are reflected by both colors, and therefore the color obtained is blue. However, as mentioned above, the color blue is a bright but desaturated color, since a broad range of the spectrum is reflected which excites not only the blue receptor in the human eye.

On the right side of Fig. 4, the principle of optical color mixing is illustrated. In optical color mixing, the primary colors red, green and blue are used. These colors, as shown in Fig. 3a, only reflect a small portion of the white light and are therefore dark. On the other hand, these colors are capable of exciting only one color receptor in the human eye so that the color obtained appears saturated. When printing optical primary colors on top of each other, they would cancel each other out so that the color obtained would always be black. Therefore, the optical primary colors are printed next to each other so that the human eye may not resolve the different origins of the colors, especially if the observers is far away from the color dots. A red dot may then excite the red receptor in the human eye, and a green dot may raise the green receptor in the human eye yielding the color impression yellow.

Fig. 5: Kueppers' color separation

Fig. 5 illustrates the principle of integral color mixing, which is also referred to as Kueppers' color separation. It is based on an RGB-representation of a color. In the example, the color is defined as stimulating the red cone with 40%, the green cone with 58% and the blue cone with 10%. This color is now transformed into a Kueppers' color separation. First, the maximum percentage value to which all three types of cone receptors are excited is determined. This maximum value is 10%, which means that in Kueppers' color separation, 10% out of 100% are reserved for the color white. 10% are subtracted from the percentage values of red and of green which yields values of 30% for red and 48% of green. Then, the difference between the dominant color (the color with the highest percentage values), and the second-dominant color (the color with the second highest percentage values) is calculated. In the example, the difference is 18% (i.e. green is 18% above red) which means that 18% out of 100% are reserved for green. 30% is the percentage value that red and green have in common, and an optical mixture of the colors red and green yields the color yellow. Therefore, 30% out of 100% is reserved for the color yellow in Kueppers' color separation. There are still 42% out of 100% in Kueppers' color separation which are undefined. These 42% are filled with the color black. In general, one can say that in Kueppers' color separation, any color may be represented by an chromatic component being composed of at most one of the subtractive primary colors, and at most one of the optical primary colors. The achromatic component is composed of the color black in combination with the color white. However, the chromatic portion of the Kueppers' color separation may also be completely absent, if the color to be reproduced is an entirely achromatic color, e.g. the color 100% red, 100% green and 100% blue yield a 100% white. Similarly, the achromatic portion of the Kueppers' color separation may also lack completely, if the color to be reproduced (e.g. 100% red) does not require any achromatic component. In Kueppers' color separation, each RGB color is represented by at most four colors out of the eight colors (red, green, blue, cyan, magenta, yellow, black, and white). The color separation may be divided into four cases according to the numbers of different colors used to represent the RGB color. There are eight possibilities of printing exactly one color, 22 possibilities of printing exactly two colors, 24 possibilities of printing exactly three colors, and nine possibilities of printing exactly four colors for the representation of an RGB-coded color, making up 63 possibilities altogether.

Fig. 6: Traditional halftoning procedures

The principles of different halftoning procedures are elucidated by means of Figs. 6a, b and c.

Fig. 6a illustrates a halftoning technique to represent a color according to Kueppers' color separation. This halftoning technique starts from an RGB-color separation of a pixel.

The upper part of Fig. 6a shows the RGB color considered in Fig. 5. This RGB-color is transformed, as described above, into a Kueppers' color separation. Then, a pixel area is created which is divided into two sections. One section includes the chromatic component, which are the colors green and yellow, whereas the achromatic component has the colors black and white. The achromatic component therefore occupies 52% of the pixel area, whereas the chromatic component occupies 48% of the pixel area. 18% of the entire pixel area is filled with a solid green surface, next to a solid yellow surface. In the achromatic component, 10% of the entire surface is covered with white, which means that 10% of the pixel area is not printed and has the color of the white paper. 42% of the entire pixel area is covered with the color black. The individual subsections of the pixel are represented as solid color areas which do not overlap.

A second example is given in which a color (50% red, 0% green, 30% blue) is to be reproduced by means of Kueppers' halftoning. First, the color is represented in Kueppers' color separation. The maximum percentage value all colors have in common is 0%. Therefore, the color white does not appear in Kueppers' color separation. Next, the difference is calculated between the dominant color and the second-dominant color. This difference is 20%. Therefore, 20% out of 100% are reserved for red in the Kueppers' color separation. There are 30% remaining for the colors red and blue. The mixture of these two colors yields the color magenta, so that 30% are reserved for magenta. To obtain the complete 100%, 50% are still missing. These 50% are filled with the color black. This color is represented in Kueppers' halftoning as an area of 20% for the color red, an area of 30% for the color magenta, and 50% of the pixel area is filled with the color black. Again, all solid color areas are printed next to each other, so that no overlapping occurs.

In the halftoning procedures illustrated in Figs. 6b and c, no solid color areas are printed. Rather, these halftoning procedures refer to dot-based halftoning, in which dots are printed. In the following two halftoning techniques, dots are printed at least partially overlapping.

Fig. 6b refers to traditional amplitude modulation halftoning based on the subtractive primary colors cyan, magenta and yellow. In each pixel, which corresponds to a certain surface which is supposed to generate a color impression in the eye of the observer, three dots (one cyan dot, one magenta dot and a yellow dot) of different sizes are printed. The dots partially overlap. In the overlapping portion, the principles of subtractive color mixing apply, in which the colors act as filters, whereas in the non-overlapping portions, the principles of optical color mixing apply which means that each of the colors cyan, magenta and yellow excites two color receptors in the human eye. Amplitude modulation halftoning could also be used with regard to Kueppers' color separation for a seven-color printer. However, since the non-overprinting property is violated by the amplitude modulation halftoning, several of the core advantages of the Kueppers' method, viz. maximal color gamut, reduced ink limits and derived benefits are given up. For each of the individual colors cyan, magenta and yellow, an extra dot raster is calculated, and the dot rasters are displaced with certain offset angles, e.g. yellow = 0°, cyan = 75°, black = 135°, and magenta = 15°. The rasters are printed on top of each other, whereby the dots partially overlap as shown in Fig. 6b. Traditionally, an error diffusion process is applied to each of the color rasters individually. However, as will be explained below, according to embodiments of the invention, in device state error diffusion, the error diffusion is applied with regard to each printed pixel (device state) individually.

Fig. 6c refers to frequency modulation halftoning based on the subtractive primary colors cyan, magenta and yellow. Each pixel contains a certain number of dots. A certain number of dots is printed in cyan, magenta and yellow according to which pixel color is to be printed. It should be mentioned that all dots have the same size, and only the number of dots varies within one pixel area to obtain a color impression. This is in contrast to amplitude modulation, where the dots vary in size. Frequency modulation halftoning could also be used with regard to Kueppers' color separation for a seven color printer. However, since the non-overprinting property is also violated by the amplitude modulation halftoning, several of the core advantages of the Kueppers' method, viz. maximal color gamut, reduced ink limits and derived benefits are surrendered.

Fig. 7: Single color Kueppers' device states

Fig. 7 illustrates the CIE-LAB-color space in which a set of eight Kueppers' device states is indicated. The gamut of all visible colors is indicated by means of dotted lines. The Kueppers' device states $D_1$-$D_8$ are marked as boxed crosses and refer to the colors cyan, magenta, yellow, red, green, blue, black and white in the CIE-LAB- color space. In this example, a pixel is the same as a dot of one of the just mentioned colors. To reproduce the continuous tone pixel color indicated in Fig. 7, the closest Kueppers' device state is determined which is the device state $D_4$ ("yellow") in the example. On the paper, a pixel is printed which is yellow dot. The dots are printed next to each other with no space between them. In some of the embodiments it is not possible to print the dots with no space between them, e.g. due to the mechanics of the print nozzles. In these embodiments, the white interspace may be considered in the error diffusion.
Alternatively, instead of nine dots, as shown in Fig. 7, one could also print several dots per pixel, e.g a 3x3 dot matrix. An error is calculated between the continuous tone pixel color and the determined Kueppers' device state, and the error is diffused to pixels in the neighborhood. In the lower part of Fig. 7, all eight possible Kueppers' device states are shown. In the example, each device state is a pixel which is made up of one dot. It should be mentioned that the dot in the device state $D_2$ ("white") is indicated in dotted lines, which means that this Kueppers' device state may also be represented without any ink, simply by means of the paper on which it is printed. This may be chosen if the color of the paper is a pure white.

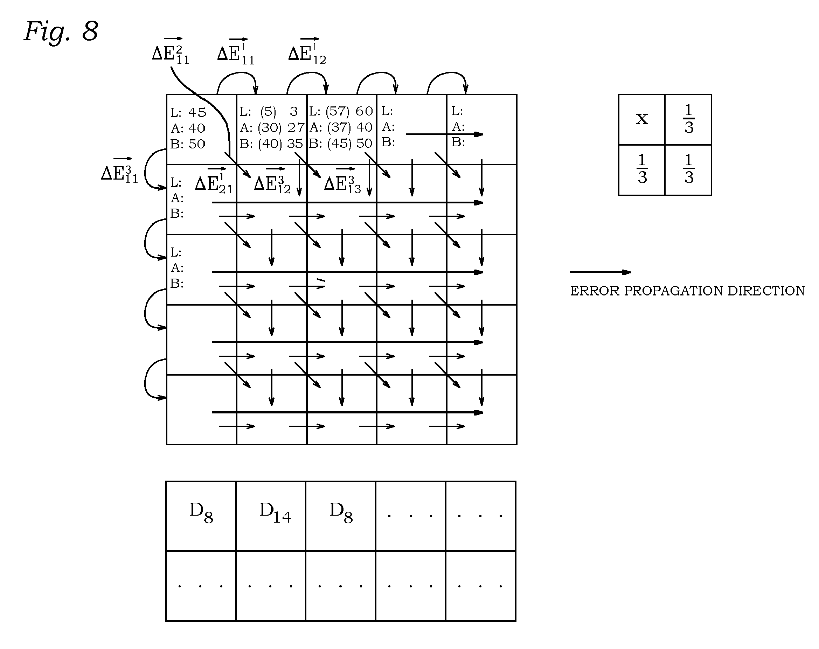

Figs. 8 and 9: Error diffusion

Figs. 8 and 9 explain the principles of device state error diffusion. As mentioned above, in the context of traditional halftoning techniques, error diffusion is performed for each of the rasters of the primary colors separately (in other words: for each color plane independently), whereas in device state error diffusion, each device state is considered as a point in a 3-dimensional color space, for example. In the upper part of Fig. 8, an image matrix is given, in which individual pixel colors of the image to be reproduced are indicated as LAB-values.
It should be mentioned that the error diffusion procedure presented below is illustrated in the CIE-LAB color space in Fig. 9 primarily for the sake of visualization. Using device-independent color spaces such as CIE-LAB may lead to requests for printing out-of-gamut colors which is a problem generally referred to as out-of-gamut mapping. Therefore, the procedure may be directly performed in the device color space of the inkjet printer 1 which has the advantage that any input color is by definition inside the device gamut, and hence the problem of (out-of-)gamut mapping does not occur. If during the error diffusion a color is to be printed which is beyond the domain of percentage values of inks (e.g. 115% of red ink), the color may easily be reduced to an admissible ink percentage value. Since the concepts of gamut mapping do not belong to color separation and halftoning, the error diffusion may preferably be performed in a device-dependent ink color space. It should be mentioned that when performing the error diffusion in a device-dependent color space, the distance between a continuous tone pixel color and a Kueppers' device state to be selected refers to the differences of amounts of ink between the two colors, but not to the perceptual difference between these two colors. In a device-independent color space, such as the CIE-LAB color space, the Euclidean distance between two colors is the closer, the more perceptually similar they are.
The device-dependent color space is an eight dimensional color space being partitioned into three-dimensional sub-spaces (at least four components are required to be set to zero, the sum of components adds up to 100%) arranged within the eight-dimensional color space which cannot be visualized since it is inaccessible to human's spatial sense. It may occur within the procedure described below that one sub-space is left, and a point is reached having more than four components unequal to zero. Then, this point which is referred to as "inadmissible" may be reduced to an "admissible" point having at least four coordinates unequal to zero. This reduction may be performed by simplifying the minimum amount of the three optical primary colors to white, and the minimum amount of the three subtractive colors to white. Each two optical primary colors may be replaced with a subtractive color, and each two subtractive colors may be replaced with the color white plus an optical primary color. One may also develop the idea that the entire eight-dimensional color space is partitioned into equivalence classes, whereby each equivalence class has one representative which is admissible (at least four components are unequal to zero, the components add up to 100%); all the other members of the equivalence class (which are inadmissible) may be reduced to that representative. Incidentally, all members of one equivalence class refer to the same optical impression (although their Euclidean distance is unequal to zero). E.g. an inadmissible color only having a red and green component may be reduced to an admissible color with a yellow and black component, according to the rules of Kueppers' color separation.

Alternatively, if an inadmissible point is obtained within the procedure, one may also distribute some of the (more than four) components unequal to zero to components of neighboring primary colors to reach an admissible point within one of the subspaces in the device color space. If the sum of components of a color is larger than 100%, one may multiply all the individual components with the same factor, so that the sum of components becomes 100%. It should be mentioned that the reduction above is afflicted with an error which may also be error diffused. Of course, other projections of an inadmissible point onto an admissible point are also conceivable. Furthermore, it is also possible to switch from the eight-dimensional device space back into the three-dimensional RGB color space.

However, reductions of inadmissible points also need to be performed if the error diffusion is performed in a device-independent color space, e.g. if a color obtained during the error diffusion is out of the gamut of the printing device.

The error diffusion starts with the leftmost pixel of the first row. Its LAB-values are (60/40/50). This pixel is also indicated in the CIE-LAB-color space of Fig. 9a. In the CIE-LAB-color spaces of Figs. 9a-c, a set of available Kueppers' device states is indicated as boxed crosses. Furthermore, Voronoi regions are also plotted which indicate a region around each Kueppers' device state in which all points are closer to the Kueppers' device state than to any other Kueppers' device state. By means of the Voronoi-diagram, a closest device state is determined and is printed. It should be mentioned that the error diffusion may also be implemented without using Voronoi diagrams. In the example of Fig. 9a, this is device state $D_8$. The current error $\Delta \vec{E}^c$ (= the difference between the (original, non error-corrected) continuous tone pixel color and the closest Kueppers' device state printed for this original continuous tone pixel color) is calculated and is divided into three thirds.

$$\Delta \vec{E}^c = cont\_pixel\_color - closest\_K.s'\_device\_state$$

In the example of Fig. 9a, the current error is also the error which is diffused to neighboring pixels which have not been visited yet. The division of the error to be diffused is indicated by means of a filter scheme shown on the right upper half of Fig. 8. In this filter scheme, "X" stands for the pixel which is currently visited, "1/3" to the right of the pixel indicates that 1/3 of the error is diffused to the pixel directly right of the pixel currently visited, "1/3" diagonally to the right indicates that one third of the error to be diffused is distributed to the diagonally right pixel and "1/3" directly below "X" indicates that one third is distributed to the pixel directly under the pixel currently visited.

The neighboring pixels of pixel (1,1) are the pixels (1,2), (2,2) and (2,1). Hence, a third of the error vector is added to the continuous tone pixel color of the neighboring pixel. Looking at pixel (1,2), the original LAB-color values (5/30/40) are put in brackets. This value is corrected by the error diffused to pixel (1,2) which is only the error $\Delta \vec{E}^1_{11}$,, since no other error diffuses its error to pixel (1,2), resulting in the LAB-value (3/27/35). While the original vale (5/30/40) would have been transformed into device state $D_{10}$, the error-corrected LAB-value is represented by $D_{14}$. It should be mentioned that if this error-corrected LAB-value could be printed (since it is a Kueppers' device state), then the resulting overall-error would be zero. However, since the point (3/27/35) is not a Kueppers' device state, a new error occurs which is $\Delta \vec{E}_{12}$. This error vector can be represented as the sum of error $\Delta \vec{E}^1_{11}$ and $\Delta \vec{E}^c_{12}$. The vector $\Delta \vec{E}^c_{12}$ represents the (current) error between the original LAB-value and the device-state actually printed for this LAB-value. However, the error which is diffused to neighboring pixels is $\Delta \vec{E}_{12}$. For pixel (1,2), device state $D_{14}$ is printed. In pixel (1,3), one third of the error vector $\Delta \vec{E}_{12}$ which is represented as $\Delta \vec{E}^1_{12}$ is used to correct the original LAB-value (57/37/45). The point obtained is (60/40/50) and will be represented by printing device state $D_8$. The new error is $\Delta \vec{E}_{13} = \Delta \vec{E}^1_{12} + \Delta \vec{E}^c_{13}$, whereby $\Delta \vec{E}^c_{13}$ represents the error between the device state $D_8$ and the original LAB-point (57/37/45). The error diffusion process may be conceived as adapting an original LAB-point (in brackets) into an error-corrected LAB-point and calculating the error which is the closest device state of the error-corrected LAB-point and the error-corrected LAB-point. This error is diffused to neighboring pixels.

In this manner, the first row of the pixel matrix is determined and the corresponding Kueppers' device states are printed. Subsequently, the error diffusion for the second row of the matrix is calculated, and the corresponding Kueppers' device states are printed. In this way, the error is propagated over the whole image and corresponding Kueppers' device states are printed on the print medium. Alternatively, the error could also be propagated in a serpentine manner.

It should be mentioned that in the example shown in Figs. 9a-c, the device-states are 2x2 sub-pixels. Each sub-pixel corresponds to one dot, and the dots are printed next to each other, so that there is substantially no space between the individual dots, as required in Kueppers' halftoning procedure. In the example, 155 device states ($D_1$ - $D_{155}$) are used, whereas only 18 device states are depicted in Figs. 9a - c. The number of 155 device states is the sum of eight device states (= eight possibilities, see above), in which all four sub-pixels have the same color, 66 (= 3*22 possibilities, see above) device states, in which two different colors are used for the four sub-pixels, 72 (= 3*24 possibilities, see above) device states, in which three colors are used for the four sub-pixels, and nine (nine possibilities, see above) device states, in which each of the four sub-pixels has a different color.

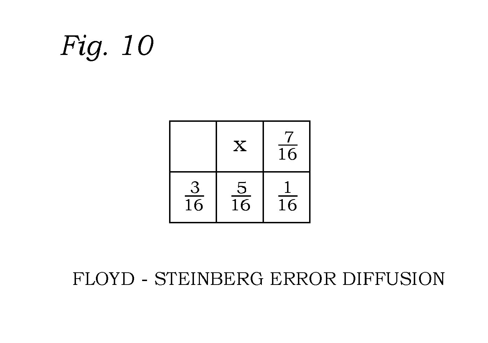

Fig. 10: Floyd-Steinberg error diffusion

While the error has been distributed in three equal parts and distributed to neighboring pixels as shown in Fig. 8, Fig. 10 describes an alternative way of diffusing the error which is commonly referred to as the Floyd-Steinberg error diffusion algorithm. For each pixel in the image, first the closest Kueppers' device state is determined. Then, the difference between the value in the image and the Kueppers' device state is calculated. Now, these error values are divided up and distributed over the neighboring pixels which have not been visited yet. When one gets to these later pixels, the errors distributed are added from the earlier ones, the original values are added to the original color values and so on as indicated above. In color, it involves matching the input color to the closest available hardware color, which may be difficult depending on the available Kueppers' device states. There are many ways of distributing the errors and many ways of scanning the image. The two basic ways of scanning the image are with a normal left-to-right, top-to-bottom raster, or with an alternating left-to-right then right-to-left raster. The latter method generally produces fewer artifacts and may be used with all the error diffusion patterns discussed below. The different ways of dividing up the error can be expressed as patterns (or filters).

In the filter shown in Fig. 10, the "X" represents the pixel which is currently scanned, and the numbers (called weights, for equally boring reasons) represent the proportion of the error distributed to the pixel in that position. Here, the pixel immediately to the right gets 7/16 of the error (the divisor is 16 because the weights add to 16), the pixel directly below gets 5/16 of the error, and the diagonally adjacent pixels get 3/16 and 1/16.

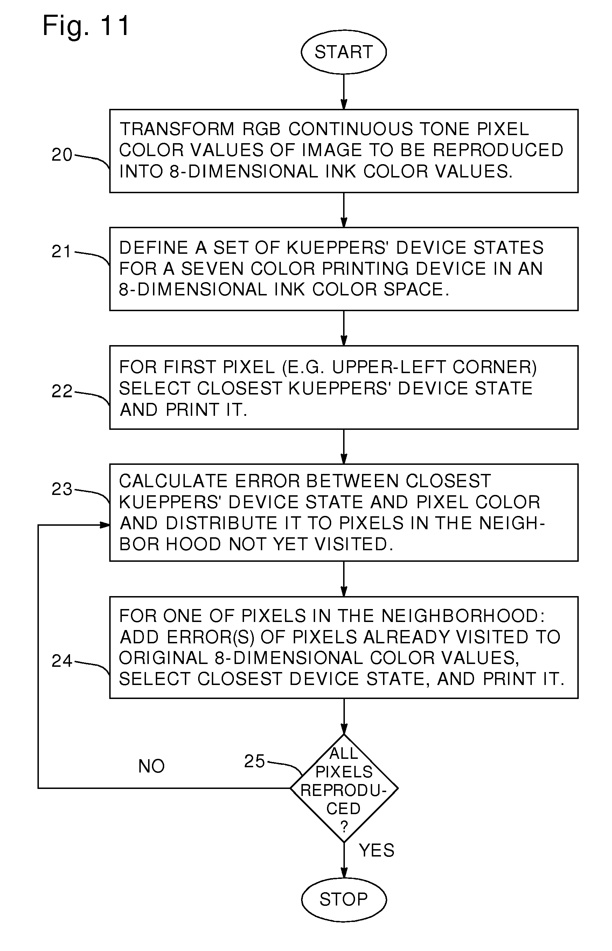

Fig. 11: Flowchart: error diffusion in a device-dependent color space

Fig. 11 shows a flowchart indicating the course of action of action of an error diffusion in a device-dependent color space, such as the eight-dimensional ink color space of the seven color inkjet printer of Fig. 1. At 20, RGB continuous tone pixel color values of an image to be reproduced are transformed into 8-dimensional ink color values according to Kueppers' color separation. At 21, a set of Kueppers' device states for a seven-color inkjet printer is defined. At 22, for a first pixel (e.g. in the upper left corner), the closest Kueppers' device state is selected, and printed. At 23, an error between the closest Kueppers' device state and the continuous tone pixel color is calculated. The error is distributed to pixels in the neighborhood not yet visited. At 24, for one of the pixels in the neighborhood, to which the error (or part of the error) has been distributed and which has already been visited, the error is added to original 8-dimensional color values. The closest Kueppers' device state is selected, and the device state is printed. At 25, it is ascertained whether all pixels have been reproduced. In the negative case, it is jumped back to 23, in the affirmative case, the procedure stops.

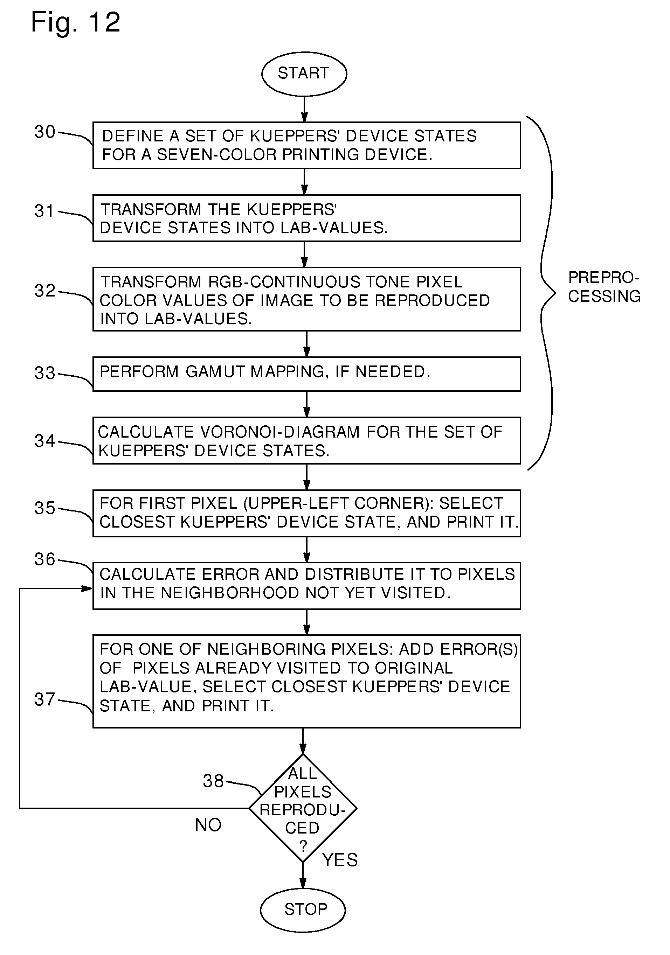

Fig. 12: Flowchart: error diffusion in a device-independent color space

Fig. 12 shows a flowchart indicating the course of action of the error diffusion described with reference to Figs. 8 and 9. At 30, a set of Kueppers' device states is defined which are reproducible by means of a seven-color printing device. At 31, the Kueppers' device states are transformed into LAB color values, and at 32, the RGB continuous tone pixel color values of the image to be reproduced are also transformed into LAB-values, if they are not yet available as LAB-values. At 33, a gamut-mapping is performed in the case that the gamut of the image to be printed does not entirely lie within the gamut of the printing device. A Voronoi-diagram is calculated for the set of Kueppers' device states at 34. The steps performed up to here belong to the preprocessing procedure and are only performed once. Then, at 35, by means of the Voronoi-diagram, the closest Kueppers' device state is selected for the LAB-values of the first pixel of the image (e.g. the leftmost - top pixel). This Kueppers' device state is printed, and an error between the closest Kueppers' device state and the image pixel color is calculated. This error is distributed to the neighboring pixels not yet visited. At 37, a neighboring pixel is considered for which all relevant errors (from pixels whose error has impact on the currently visited pixel) have been calculated and by means of the Voronoi-diagram, the closest Kueppers' device state is selected for the error-corrected pixel value. The selected Kueppers' device state is printed. If all pixels of the image have been reproduced, then the procedure is stopped. Otherwise, the procedure returns to 36 where the error is calculated between the next original continuous tone pixel color and the selected Kueppers' device state.

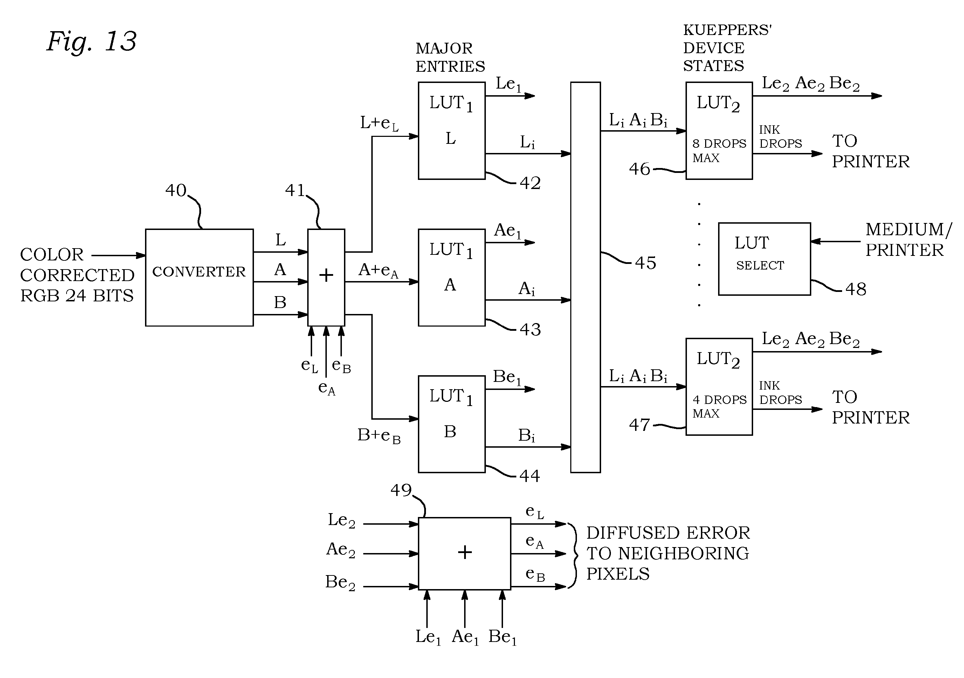

Fig. 13: LUT-based embodiment

Fig. 13 illustrates a hardware or software implementation of the Kueppers' state error diffusion based on look-up tables (LUTs). The look-up tables convert an indexing value, addressing one or more locations in the look-up table, to one or more output values. The computations for determining the optimum Kueppers' device state and the resulting error are performed when developing the entries for the look-up tables and, thus, the calculations and considerations involved in creating these look-up table entries may be extremely complex and even impossible to perform in real time at the desired rate of printing. These look-up tables 42-44, 46, 47 may be implemented in hardware, as a ROM, or may be implemented in software. A software look-up table would use the indexing value to identify a particular line or lines of code containing the output value(s). A person skilled in the art would understand how to implement a look-up table in software.

In Fig. 13, the 24-bit corrected RGB-values for a particular pixel position are converted by converter 40 to create corresponding LAB values.

The output of the converter is an 8-bit value for L, an 8-bit value for A, and an 8-bit value for B. These values are supplied to a summer 41. The summer 41 adds to these values diffused errors generated by neighboring pixel positions which have already been processed. There are many types of error diffusion techniques which may be used with the present invention, although one particular error diffusion technique will be described later.

The error-compensated values for each LAB-value are then applied to their associated look-up table. These look-up tables 42-44 only contain a subset of the possible tone levels for each color. The LAB-values in this subset are referred to as major entries. Limiting the tones to a subset of the tones at this stage reduces the required memory space of the device state look-up tables, to be described later. Look-up tables 42-44 may be eliminated if much larger look-up tables can be tolerated.

A tone error between the tone value applied to each of the look-up tables and the closest major entry selected ($L_i$, $A_i$, $B_i$) is also output from each look-up table as an error value ($Le_1$, $Ae_1$, $Be_1$). Each of these errors is diffused in accordance with the error diffusion technique used. In one particular embodiment, the error diffusion technique diffuses the error according to the Floyd-Steinberg algorithm into four nearby pixels, such as the pixel directly to the right of the pixel being processed and the three adjacent pixels below the pixel being processed. The pixels in the image map are processed from left to right, row by row. A serpentine or other processing technique may also be used.

Different types of media absorb different amounts of ink. For example, ink deposited on the surface of a glossy photo quality medium does not significantly diffuse into the medium in contrast to ink deposited on a more coarse medium, such as plain paper. Ink which stays on the surface of the medium contributes more to the resulting color than ink which diffuses into the medium. Since ink dispersion within a photo quality medium is less than that in plain paper, up to 8 drops of ink may be used to create a single color dot on the photo quality medium without undesirable dispersion, while only four drops may be acceptable for plain paper. Therefore, a separate look-up table is prepared for each type of medium intended for use with the printer to optimize ink usage and optimize the visual quality of the image printed. Two such look-up tables are shown as look-up tables, and, although there may be many more look-up tables. A particular look-up table is selected by a selector 48 having a control signal which identifies a particular type of medium to be printed upon. The selector may be any decoder which receives a particular coded signal and outputs an enabling signal.

If the system of Fig. 13 is intended for any of a number of different types of printers, the look-up tables 46, 47 may also be selected depending upon the type of printer being used as well as the type of medium. For example, some printers will only be suitable for printing color dots of 4 drops.

The outputs of the 1-dimensional look-up tables are combined by using a bus or a software equivalent of a bus or other type of combiner so as to create a single 3-dimensional index or address ($L_iA_iB_i$) for indexing one or more entries in the selected look-up table. The ink drop combinations contained in the look-up tables may be experimentally determined to provide a wide range of printed color dots while optimizing ink usage and obtaining fairly uniform ink dispersion within the medium. One output of the selected look-up table will be a code value identifying a Kueppers' device state which consists of a particular combination of ink dots selected from the available inks R, G, B, C, M, Y, and K. This code value is then further processed by the printer controller to convert this value into energizing pulses for ejecting the color ink droplets at precise times from the various print cartridges in the printer 1 as the print cartridges are scanning across the medium.

The selected look-up tables also outputs a second error $e_2$ for the color components L, A and B. This error $e_2$ from the selected look-up table is then summed by summer 41 shown in Fig. 13, with the error $e_1$ from the major entry look-up tables. The summer then outputs the resulting error signals to be diffused to the neighboring pixels for use during the subsequent processing of pixels. These diffused errors are then applied to the summer as previously described for the next pixel to be processed. In one embodiment, one quarter of the total error for a particular pixel position is distributed (diffused) into four neighboring pixels, while in other error diffusion techniques the error is diffused in other ways to neighboring pixels as would be understood by those skilled in the art.

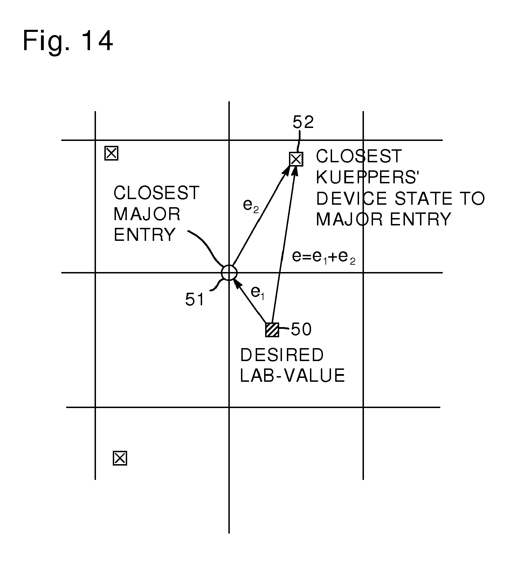

Fig. 14: Selection of a major entry

Fig. 14 further illustrates the steps performed by look-up tables. Although the indexing of the look-up tables is carried out in three dimensions by taking into account the levels for L, A, and B, only two dimensions are shown in Fig. 14 for the sake of simplicity.

The closest major entry 51 in the look-up tables is identified in Fig. 14. An error for the L, A, and B components is identified as $e_1$; its closest major entry is then applied to the selected look-up tables to elect a closest Kueppers' device state to the major entry, which corresponds to a set of color dots printed on the medium. The error between the closest major entry and the color dots printed is $e_2$, with the total error between the desired LAB-value and the printed color dots being the sum of $e_1$ and $e_2$.

Unlike conventional error diffusion which treats each of the color planes independently, the technique shown in Fig. 13 considers each Kueppers' device state as a point in a 3-dimensional CIE-LAB-color space or in an 8-dimensional Kueppers' ink color space.

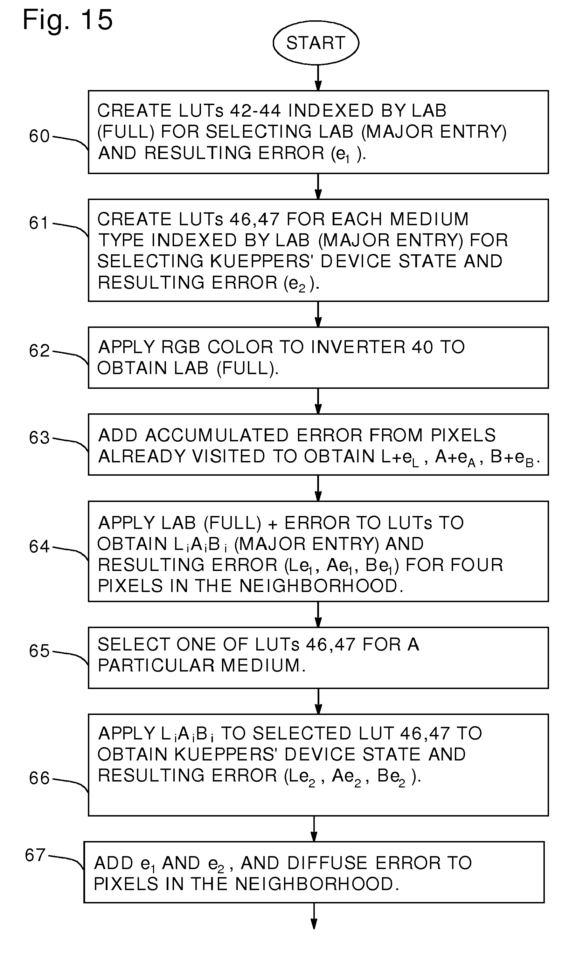

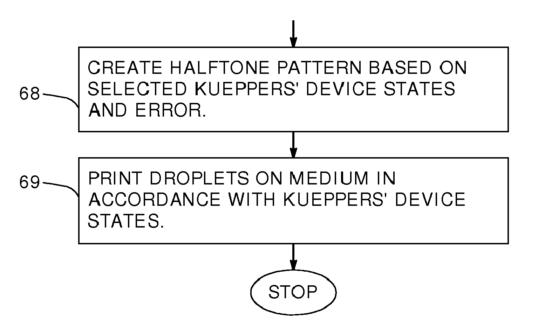

Fig. 15: Flowchart for the embodiment of Figs. 13 and 14

The error diffusion illustrated in Figs. 13 and 14 will be summarized by means of the flowchart shown in Fig. 15. At 60, LUTs 42-44 are created which are indexed by LAB-values for selecting a LAB-value (major entry). Furthermore, the resulting error $e_1$ is determined. At 61, the LUTs 46, 47 are created for each medium type indexed by LAB (major entry) for selecting a Kueppers' device state and the resulting error ($e_2$). At 62, the RGB color values are applied to inverter 40 to obtain the full LAB-values. At 63, the accumulated error is added from pixels already visited to obtain $L+e_L$, $A+e_A$, $B+e_B$. At 64, the full LAB-values and the error are applied to LUTs to obtain $L_iA_iB_i$ (major entry) and resulting error ($Le_1$, $Ae_1$, $Be_1$) for four pixels in the neighborhood. At 65, one of the LUTs 46, 47 is selected for a particular medium. At 66, the $L_iA_iB_i$ are applied to the selected LUTs 46, 47 to obtain the Kueppers' device state and the resulting error ($Le_2$, $Ae_2$, $Be_2$). At 67, $e_1$ and $e_2$ are added, and the error is diffused to pixels in the neighborhood. At 68, a halftone pattern is created based on selected Kueppers' device states and errors. At 69, droplets in accordance with Kueppers' device states are printed on the medium.

Thus, the embodiments of the invention described above allow for reproducing a continuous tone pixel color by means of an error diffusion procedure based on Kueppers' color separation and halftoning.

All publications and existing systems mentioned in this specification are herein incorporated by reference.

Although certain methods and products constructed in accordance with the teachings of the invention have been described therein, the scope of coverage of this patent is not limited thereto. On the contrary, this patent covers all embodiments of the teachings of the invention fairly falling within the scope of the appended claims either literally or under the doctrine of equivalents.

**Claims**

1. A method of reproducing continuous tone pixel colors of a color image having many pixels based on Kueppers' device states, wherein the Kueppers' device states of a printing device are the printed pixel colors that are allowed based on Kueppers' color separation and halftoning, the method comprising:

   selecting a Kueppers' device state in the proximity of a continuous tone pixel color to be reproduced from the printing device's set of Kueppers' device states,
   printing the Kueppers' device state, and
   diffusing an error between the continuous tone pixel color and the selected Kueppers' device state to one or more pixels in the neighborhood.

2. The method of claim 1, wherein each Kueppers' device state is a dot of one of the colors white, black, cyan, magenta, yellow, red, green, and blue.

3. The method of claim 1, wherein the Kueppers' device states are pixels each containing dots of only one of the colors white, black, cyan, magenta, yellow, red, green and blue.

4. The method of claim 1, wherein each Kueppers' device state is a pixel represented as a 2x2 sub-pixel matrix, each sub-pixel being one dot of one of the colors white, black, cyan, magenta, yellow, red, green and blue.

5. The method of claim 2, wherein the Kueppers' device state in the proximity of the continuous pixel color is the Kueppers' device state with the color of a largest component of the continuous pixel color.

6. The method of any one of claims 1 to 5, wherein a Kueppers' device state in the proximity of the continuous tone pixel color is the closest device state with regard to the continuous tone pixel color and is determined by means of a metric.

7. The method of any one of claims 1 to 6, wherein the continuous tone pixel colors and the Kueppers' device states are represented in a perceptually linear color space, and the steps of selecting a Kueppers' device state and diffusion the error are also performed in the Kueppers' device color space.

8. The method of any one of claims 1 to 6, wherein the continuous tone pixel colors and the Kueppers' device states are represented in an eight-dimensional Kueppers' device color space, and the steps of selecting a Kueppers' device state and diffusing the error are also performed in the Kueppers' device color space.

9. A printing device comprising a controller for performing a method of reproducing continuous tone pixel colors of a color image having many pixels based on Kueppers' device states, wherein the Kueppers' device states of a printing device are the printed pixel colors that are allowed based on Kueppers' color separation and halftoning, the method comprising:

selecting a Kueppers' device state in the proximity of acontinuous tone pixel color to be reproduced from the printing device's set of Kueppers' device states,
printing the Kueppers' device state, and
diffusing an error between the continuous tone pixel color and the selected Kueppers' device state to one or more pixels in the neighborhood.

10. A computer program product which is either in the form of a machine-readable medium with program code stored on it, or in the form of a propagated signal comprising a representation of program code, wherein the program code is arranged to carry out a method, when executed on a computer, according to any one of claims 1 to 8.

Fig. 1

Fig. 2

Fig. 3a

CYAN

30
31

MAGENTA

33
32

YELLOW

35
34

RED

36
37

GREEN

38
39

BLUE

40
41

EP 1 912 423 A1

*Fig. 3b*

WHITE

42

R
1,0
0,5
400   500   600   700   $\lambda$ [nm]

BLACK

43

R
1,0
0,5
400   500   600   700   $\lambda$ [nm]

*Fig. 4*

SUBTRACTIVE COLOR MIXING

OPTICAL COLOR MIXING

CYAN + MAGENTA = BLUE

RED + GREEN = YELLOW

EP 1 912 423 A1

## Fig. 5

RGB-SEPARATION

40% 58% 10%

R G B

KUEPPERS' COLOR
SEPARATION

42% K

18% G

30% Y

10% W

# Fig. 6a

42% — K
18% — G
30% — Y
10% — W

40% R
58% G
10% B

REPRESENTATION IN KUEPPERS' HALFTONING:

CHROMATIC COMPONENT  {  G | W  /  Y | K  }  ACHROMATIC COMPONENT

50% — K
20% — R
30% — M

50% R
0% G
30% B

REPRESENTATION IN KUEPPERS' HALFTONING:

CHROMATIC COMPONENT  {  R | K  /  M | K  }  ACHROMATIC COMPONENT

## Fig. 6b

OPTICAL
COLOR MIXING

SUBTRACTIVE
COLOR MIXING

AMPLITUDE - MODULATION
HALFTONING

## Fig. 6c

FREQUENCY - MODULATION
HALFTONING

EP 1 912 423 A1

## Fig. 7

SINGLE-COLOR DEVICE STATES

$D_1$: BLACK  $D_3$: RED  $D_5$: GREEN  $D_7$: BLUE

$D_2$: WHITE  $D_6$: CYAN  $D_8$: MAGENTA  $D_4$: YELLOW

*Fig. 8*

$\Delta\vec{E}_{11}^2$  $\Delta\vec{E}_{11}^1$  $\Delta\vec{E}_{12}^1$

| L: 45<br>A: 40<br>B: 50 | L: (5) 3<br>A: (30) 27<br>B: (40) 35 | L: (57) 60<br>A: (37) 40<br>B: (45) 50 | L:<br>A:<br>B: | L:<br>A:<br>B: |
|---|---|---|---|---|

$\Delta\vec{E}_{11}^3$  $\Delta\vec{E}_{21}^1$  $\Delta\vec{E}_{12}^3$  $\Delta\vec{E}_{13}^3$

L:<br>A:<br>B:

L:<br>A:<br>B:

| x | $\frac{1}{3}$ |
|---|---|
| $\frac{1}{3}$ | $\frac{1}{3}$ |

→ ERROR PROPAGATION DIRECTION

| $D_8$ | $D_{14}$ | $D_8$ | . . . | . . . |
|---|---|---|---|---|
| . . . | . . . | . . . | . . . | . . . |

EP 1 912 423 A1

Fig. 9

Fig. 9a

Fig. 9b

Fig. 9c

2x2 SUBPIXEL DEVICE STATES

⊠ : = KUEPPERS' DEVICE STATE

• : = CONTINUOUS TONE PIXEL COLOR

*Fig. 10*

| | x | $\frac{7}{16}$ |
|---|---|---|
| $\frac{3}{16}$ | $\frac{5}{16}$ | $\frac{1}{16}$ |

FLOYD - STEINBERG ERROR DIFFUSION

## Fig. 11

START

20 — TRANSFORM RGB CONTINUOUS TONE PIXEL COLOR VALUES OF IMAGE TO BE REPRODUCED INTO 8-DIMENSIONAL INK COLOR VALUES.

21 — DEFINE A SET OF KUEPPERS' DEVICE STATES FOR A SEVEN COLOR PRINTING DEVICE IN AN 8-DIMENSIONAL INK COLOR SPACE.

22 — FOR FIRST PIXEL (E.G. UPPER-LEFT CORNER) SELECT CLOSEST KUEPPERS' DEVICE STATE AND PRINT IT.

23 — CALCULATE ERROR BETWEEN CLOSEST KUEPPERS' DEVICE STATE AND PIXEL COLOR AND DISTRIBUTE IT TO PIXELS IN THE NEIGH-BOR HOOD NOT YET VISITED.

24 — FOR ONE OF PIXELS IN THE NEIGHBORHOOD: ADD ERROR(S) OF PIXELS ALREADY VISITED TO ORIGINAL 8-DIMENSIONAL COLOR VALUES, SELECT CLOSEST DEVICE STATE, AND PRINT IT.

NO

25 — ALL PIXELS REPRODU-CED ?

YES

STOP

# Fig. 12

**START**

30 — DEFINE A SET OF KUEPPERS' DEVICE STATES FOR A SEVEN-COLOR PRINTING DEVICE.

31 — TRANSFORM THE KUEPPERS' DEVICE STATES INTO LAB-VALUES.

32 — TRANSFORM RGB-CONTINUOUS TONE PIXEL COLOR VALUES OF IMAGE TO BE REPRODUCED INTO LAB-VALUES.

33 — PERFORM GAMUT MAPPING, IF NEEDED.

34 — CALCULATE VORONOI-DIAGRAM FOR THE SET OF KUEPPERS' DEVICE STATES.

PREPRO-CESSING

35 — FOR FIRST PIXEL (UPPER-LEFT CORNER): SELECT CLOSEST KUEPPERS' DEVICE STATE, AND PRINT IT.

36 — CALCULATE ERROR AND DISTRIBUTE IT TO PIXELS IN THE NEIGHBORHOOD NOT YET VISITED.

37 — FOR ONE OF NEIGHBORING PIXELS: ADD ERROR(S) OF PIXELS ALREADY VISITED TO ORIGINAL LAB-VALUE, SELECT CLOSEST KUEPPERS' DEVICE STATE, AND PRINT IT.

38 — ALL PIXELS REPRODU-CED ?

NO

YES

**STOP**

*Fig. 13*

COLOR CORRECTED RGB 24 BITS → CONVERTER (40)

MAJOR ENTRIES

$L+e_L$ → LUT$_1$ L (42) → $Le_1$, $L_i$

$A+e_A$ → LUT$_1$ A (43) → $Ae_1$, $A_i$

$B+e_B$ → LUT$_1$ B (44) → $Be_1$, $B_i$

$e_L$ $e_B$ $e_A$ → (41) +

45

$L_i A_i B_i$ → LUT$_2$ 8 DROPS MAX (46) → $Le_2 Ae_2 Be_2$, INK DROPS → TO PRINTER

KUEPPERS' DEVICE STATES

LUT SELECT (48) ← MEDIUM/PRINTER

$L_i A_i B_i$ → LUT$_2$ 4 DROPS MAX (47) → $Le_2 Ae_2 Be_2$, INK DROPS → TO PRINTER

$Le_2$, $Ae_2$, $Be_2$ → + (49) → $e_L$, $e_A$, $e_B$ } DIFFUSED ERROR TO NEIGHBORING PIXELS

$Le_1$ $Ae_1$ $Be_1$

EP 1 912 423 A1

Fig. 14

52

CLOSEST
KUEPPERS'
DEVICE STATE TO
MAJOR ENTRY

CLOSEST
MAJOR
ENTRY

$e_2$

$e=e_1+e_2$

51

$e_1$

50

DESIRED
LAB-VALUE

## Fig. 15

START

60 — CREATE LUTs 42-44 INDEXED BY LAB (FULL) FOR SELECTING LAB (MAJOR ENTRY) AND RESULTING ERROR ($e_1$).

61 — CREATE LUTs 46,47 FOR EACH MEDIUM TYPE INDEXED BY LAB (MAJOR ENTRY) FOR SELECTING KUEPPERS' DEVICE STATE AND RESULTING ERROR ($e_2$).

62 — APPLY RGB COLOR TO INVERTER 40 TO OBTAIN LAB (FULL).

63 — ADD ACCUMULATED ERROR FROM PIXELS ALREADY VISITED TO OBTAIN $L+e_L$, $A+e_A$, $B+e_B$.

64 — APPLY LAB (FULL) + ERROR TO LUTs TO OBTAIN $L_iA_iB_i$ (MAJOR ENTRY) AND RESULTING ERROR ($Le_1$, $Ae_1$, $Be_1$) FOR FOUR PIXELS IN THE NEIGHBORHOOD.

65 — SELECT ONE OF LUTs 46,47 FOR A PARTICULAR MEDIUM.

66 — APPLY $L_iA_iB_i$ TO SELECTED LUT 46,47 TO OBTAIN KUEPPERS' DEVICE STATE AND RESULTING ERROR ($Le_2$, $Ae_2$, $Be_2$).

67 — ADD $e_1$ AND $e_2$, AND DIFFUSE ERROR TO PIXELS IN THE NEIGHBORHOOD.

68 — CREATE HALFTONE PATTERN BASED ON SELECTED KUEPPERS' DEVICE STATES AND ERROR.

69 — PRINT DROPLETS ON MEDIUM IN ACCORDANCE WITH KUEPPERS' DEVICE STATES.

STOP

EP 1 912 423 A1

**European Patent Office**

**EUROPEAN SEARCH REPORT**

Application Number

EP 06 12 2100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 330 075 B1 (ISHIKAWA HISASHI [JP]) 11 December 2001 (2001-12-11) * column 10, line 14 - column 10, line 67; figures 7,9,12 * ----- | 1-4,6,9, 10 | INV. H04N1/405 H04N1/52 H04N1/54 |
| X | US 6 847 732 B1 (SAKATANI KAZUOMI [JP]) 25 January 2005 (2005-01-25) * column 1, line 50 - column 2, line 14 * ----- | 1,2,6,7, 9,10 | |
| X | EP 0 373 704 A1 (OCE NEDERLAND BV [NL]) 20 June 1990 (1990-06-20) * column 8, line 55 - column 9, line 18 * ----- | 1,2,9,10 | |
| A,D | US 4 812 899 A (KUEPPERS HARALD [DE]) 14 March 1989 (1989-03-14) * the whole document * ----- | | |
| A | US 5 070 413 A (SULLIVAN JAMES R [US] ET AL) 3 December 1991 (1991-12-03) * figures 3,5 * ----- | 6,7 | |
| A | US 5 633 990 A (HOUSEL EDWARD M [US]) 27 May 1997 (1997-05-27) * column 2, line 46 - column 3, line 21 * ----- | 1-4 | TECHNICAL FIELDS SEARCHED (IPC) H04N |
| A | US 4 614 967 A (SAYANAGI KAZUO [JP]) 30 September 1986 (1986-09-30) * column 2, line 33 - column 3, line 9; figures 2-4 * ----- | | |
| A | US 2005/195420 A1 (GERRITS CAROLUS E [NL]) 8 September 2005 (2005-09-08) * paragraph [0034] - paragraph [0041] * ----- | | |

The present search report has been drawn up for all claims

| Place of search | Date of completion of the search | Examiner |
|---|---|---|
| Munich | 22 February 2007 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

34

**ANNEX TO THE EUROPEAN SEARCH REPORT
ON EUROPEAN PATENT APPLICATION NO.**

EP 06 12 2100

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2007

| Patent document cited in search report | | Publication date | Patent family member(s) | | Publication date |
|---|---|---|---|---|---|
| US 6330075 | B1 | 11-12-2001 | NONE | | |
| US 6847732 | B1 | 25-01-2005 | JP | 2001136402 A | 18-05-2001 |
| EP 0373704 | A1 | 20-06-1990 | AU | 611597 B2 | 13-06-1991 |
| | | | AU | 4443089 A | 21-06-1990 |
| | | | CA | 2005033 A1 | 15-06-1990 |
| | | | DE | 68908122 D1 | 09-09-1993 |
| | | | DE | 68908122 T2 | 05-01-1994 |
| | | | JP | 2213871 A | 24-08-1990 |
| | | | JP | 2569184 B2 | 08-01-1997 |
| | | | NL | 8803064 A | 02-07-1990 |
| | | | US | 5032853 A | 16-07-1991 |
| US 4812899 | A | 14-03-1989 | NONE | | |
| US 5070413 | A | 03-12-1991 | DE | 69015205 D1 | 26-01-1995 |
| | | | DE | 69015205 T2 | 29-06-1995 |
| | | | EP | 0495914 A1 | 29-07-1992 |
| | | | JP | 5501341 T | 11-03-1993 |
| | | | WO | 9106174 A1 | 02-05-1991 |
| US 5633990 | A | 27-05-1997 | NONE | | |
| US 4614967 | A | 30-09-1986 | JP | 58219867 A | 21-12-1983 |
| US 2005195420 | A1 | 08-09-2005 | CN | 1690878 A | 02-11-2005 |
| | | | JP | 2005253068 A | 15-09-2005 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4812899 A

- US 4878977 A